# EUROPÄISCHE PATENTANMELDUNG

(11) **EP 3 912 444 A1**
(43) Veröffentlichungstag der Anmeldung: **24.11.2021**
(21) Anmeldenummer: 21401025.8
(22) Anmeldetag: 17.05.2021
(51) Int. Cl.: A01B 63/02, A01B 69/00, A01M 21/04

(54) **ANBAUVORRICHTUNG FÜR LANDWIRTSCHAFTLICHE ARBEITSGERÄTE**

(30) Priorität: 18.05.2020 DE 102020113349
(71) Anmelder: Amazonen-Werke H. Dreyer SE & Co. KG, 49205 Hasbergen (DE)
(72) Erfinder: Austermann, Stefan, 48291 Telgte (DE); Johannaber, Stefan Jan, 49536 Lienen (DE); Wessels, Thomas, 49080 Osnabrück (DE); Klemann, Timo, 49191 Belm (DE); Hilbert, Florenz, 48282 Emsdetten (DE)

(57) **Zusammenfassung**

Die Erfindung betrifft eine Anbauvorrichtung (10) für landwirtschaftliche Arbeitsgeräte (102a-102c), mit einem sich in Querrichtung erstreckenden Trägerrahmen (12), einer Befestigungseinrichtung (22) zur Kupplung des Trägerrahmens (12) mit einem Zug- oder Trägerfahrzeug (200) und mehreren in Querrichtung nebeneinander angeordneten Kupplungsvorrichtungen (30a-30c), wobei mittels der Kupplungsvorrichtungen (30a-30c) mehrere landwirtschaftliche Arbeitsgeräte (102a-102c) in Querrichtung nebeneinander an der Anbauvorrichtung (10) befestigbar sind.

## Beschreibung

Die Erfindung betrifft eine Anbauvorrichtung für landwirtschaftliche Arbeitsgeräte nach dem Oberbegriff des Patentanspruchs 1 und ein landwirtschaftliches Arbeitssystem für die Bearbeitung von landwirtschaftlichen Nutzflächen und deren Pflanzenbestand nach dem Oberbegriff des Patentanspruchs 10.

Bei der Aussaat, der Pflege und der Ernte von Reihenkulturen werden unterschiedliche landwirtschaftliche Arbeitsgeräte, beispielsweise Bodenbearbeitungsmaschinen, Sämaschinen, Düngerstreuer, Spritzgeräte, Hacken oder Erntemaschinen, eingesetzt. Die unterschiedlichen Arbeitsgeräte weisen konstruktionsbedingt voneinander abweichende Arbeitsbreiten auf. In diesem Zusammenhang existieren Maschinentypen mit vergleichsweise kleiner Arbeitsbreite und Maschinentypen mit vergleichsweise großer Arbeitsbreite.

Arbeitsgeräte zur Bestandpflege, wie beispielsweise Hackgeräte, und Sämaschinen sollten idealerweise eine übereinstimmende Arbeitsbreite aufweisen, um bestmögliche Arbeitsergebnisse erzielen zu können. Die Bearbeitung eines Reihenbestandes mit Arbeitsgeräten, welche eine voneinander abweichende Arbeitsbreite aufweisen, führt bisher auch bei Einsatz einer GPS-gestützten RTK-Vermessung zu mangelhaften Arbeitsergebnissen.

Beispielsweise weisen Sämaschinen eine deutlich kleinere Arbeitsbreite auf als jene, die für eine spätere wirtschaftlich optimierte Bestandpflege wünschenswert ist. In diesem Zusammenhang sind also bisher große Sämaschinen oder kleine Hackgeräte erforderlich, um eine geeignete Maschinenpaarung zu erhalten.

Aus dem Stand der Technik sind sogenannte Verschiebevorrichtungen bekannt, mittels welchen ein getragenes Arbeitsgerät in Querrichtung relativ zum Trägerfahrzeug verfahrbar ist. Eine derartige Verschiebevorrichtung ist beispielsweise aus der Druckschrift DE 10 2017 110 653 B3 bekannt. Über eine entsprechende Querausrichtung des Arbeitsgeräts kann das Bearbeitungsergebnis zwar verbessert werden, es besteht jedoch weiterhin das Problem, dass der Arbeitsvorgang bei Arbeitsgeräten mit geringer Arbeitsbreite aufgrund der Vielzahl der erforderlichen Überfahrten äußerst zeitaufwendig ist.

Die der Erfindung zugrundeliegende Aufgabe besteht somit darin, die Arbeitsbreite von landwirtschaftlichen Arbeitsgeräten, welche zur Aussaat, Pflege oder Ernte von Reihenkulturen eingesetzt werden, besser aufeinander abstimmen zu können.

Die der Erfindung zugrundeliegende Aufgabe wird durch eine Anbauvorrichtung der eingangs genannten Art gelöst, wobei die erfindungsgemäße Anbauvorrichtung mehrere in Querrichtung nebeneinander angeordnete Kupplungsvorrichtungen aufweist. Mittels der Kupplungsvorrichtungen sind mehrere landwirtschaftliche Arbeitsgeräte in Querrichtung nebeneinander an der Anbauvorrichtung befestigbar.

Die Erfindung macht sich die Erkenntnis zunutze, dass die Gesamtarbeitsbreite durch die Bildung eines Geräteverbundes aus mehreren in Querrichtung nebeneinander angeordneten Arbeitsgeräten mit vergleichsweise geringem Aufwand angepasst werden kann. An den Kupplungsvorrichtungen der Anbauvorrichtung werden vorzugsweise landwirtschaftliche Arbeitsgeräte des gleichen Typs befestigt, sodass der Geräteverbund aus den mehreren Arbeitsgeräten dazu eingerichtet ist, den gleichen Bearbeitungsvorgang auszuführen. An den Kupplungsvorrichtungen der Anbauvorrichtung können beispielsweise mehrere Bodenbearbeitungsmaschinen, mehrere Sämaschinen, mehrere Hackgeräte oder mehrere Erntemaschinen befestigt werden. Die Anbauvorrichtung kann also als Universalkupplung zum gleichzeitigen Führen von mehreren Arbeitsgeräten eingesetzt werden. Der erforderliche Zeitaufwand beim Bearbeiten von großen landwirtschaftlichen Nutzflächen wird auf diese Weise erheblich reduziert. Durch die Anbauvorrichtung kann eine landwirtschaftliche Nutzfläche und deren Pflanzenbestand nacheinander mit verschiedenen Arbeitsgeräten bearbeitet werden, wobei die nacheinander eingesetzten Arbeitsgeräte konstruktionsbedingt eine unterschiedliche Arbeitsbreite aufweisen können. Die Anbauvorrichtung erlaubt es beispielsweise, eine Aussaat von Saatkörnern mit einer Sämaschine vorzunehmen, welche eine vergleichsweise kleine Arbeitsbreite, beispielsweise 3 Meter, aufweist. Die nachfolgende Pflege des Pflanzenbestandes während der Vegetation kann dann mit mehreren über die Anbauvorrichtung miteinander verbundenen Geräten erfolgen, welche insgesamt eine größere Gesamt- oder Summenarbeitsbreite, beispielsweise 9 Meter, aufweisen. Da auf diese Weise die erforderliche Anzahl von Überfahrten über die landwirtschaftliche Nutzfläche erheblich reduziert wird, kommt es zu einer deutlichen Effektivitätssteigerung bei der Bearbeitung der landwirtschaftlichen Nutzfläche.

In einer bevorzugten Ausführungsform der erfindungsgemäßen Anbauvorrichtung sind die Kupplungsvorrichtungen zur Verschiebung der an der Anbauvorrichtung befestigten Arbeitsgeräte in Querrichtung bewegbar. Die Kupplungsvorrichtungen können dabei einzeln und/oder unabhängig voneinander in Querrichtung bewegbar sein. Alternativ können die Kupplungsvorrichtungen kinematisch miteinander gekoppelt sein, sodass diese stets gemeinsam in Querrichtung bewegt werden. Die Kupplungsvorrichtungen können jeweils mit einem Parallelogrammgestänge verbunden sein, mittels welchem die Kupplungsvorrichtungen in Querrichtung bewegt werden können.

In einer Weiterbildung der erfindungsgemäßen Anbauvorrichtung weist der Trägerrahmen mehrere Rahmensegmente auf, wobei jedes Rahmensegment eine Kupplungsvorrichtung trägt und die Rahmensegmente reversibel lösbar miteinander verbunden sind. Über die reversible Lösbarkeit der Verbindung zwischen den Rahmensegmenten kann die Anzahl der Rahmensegmente variiert und auf die gewünschte Gesamt- oder Summenarbeitsbreite angepasst werden. Der Trägerrahmen der Anbauvorrichtung kann beispielsweise 2, 3, 4, 5 oder mehr als 5 Rahmensegmente aufweisen, sodass die Anbauvorrichtung beispielsweise 2, 3, 4, 5 oder mehr als 5 Kupplungsvorrichtungen zum Anbau von landwirtschaftlichen Arbeitsgeräten aufweist. Die Anbauvorrichtung ist über die reversibel lösbar miteinander verbundenen Rahmensegmente modular aufgebaut und kann zur Anpassung der Gesamt- oder Summenarbeitsbreite bzw. zur Anpassung der Anzahl der an der Anbauvorrichtung befestigbaren Arbeitsgeräte modular erweitert werden.

Darüber hinaus ist eine erfindungsgemäße Anbauvorrichtung vorteilhaft, bei welcher die Rahmensegmente an zumindest einer seitlichen Stirnseite ein oder mehrere Befestigungsglieder aufweisen. Über das eine oder die mehreren Befestigungsglieder sind die jeweiligen Rahmensegmente mit einem benachbarten Rahmensegment verbunden oder verbindbar. Vorzugsweise bilden die Befestigungsglieder von zwei nebeneinander angeordneten und aneinander befestigten Rahmensegmenten einen Befestigungsmechanismus. Vorzugsweise weisen die Rahmensegmente an beiden seitlichen Stirnseiten ein oder mehrere Befestigungsglieder auf. Ein oder mehrere Befestigungsglieder können an der linken seitlichen Stirnseite der jeweiligen Rahmensegmente angeordnet sein. Ein oder mehrere Befestigungsglieder können an der rechten seitlichen Stirnseite der jeweiligen Rahmensegmente angeordnet sein. Die Befestigungsglieder können Befestigungsstifte, Befestigungsbolzen, Befestigungsösen, Gewindebohrungen oder andere Befestigungselemente sein. Die Befestigung zweier Befestigungsglieder aneinander kann auch das Einsetzen eines separaten Befestigungsstifts oder Befestigungsbolzens erfordern.

Vorzugsweise weisen die jeweiligen Rahmensegmente zumindest ein frontseitiges Rahmenteil und zumindest ein heckseitiges Rahmenteil auf. Das frontseitige Rahmenteil und das heckseitige Rahmenteil der jeweiligen Rahmensegmente sind vorzugsweise miteinander verbunden, beispielsweise über ein Verbindungsgestänge. Die erfindungsgemäße Anbauvorrichtung kann als Frontanbauvorrichtung, als Heckanbauvorrichtung oder als universale Front- und Heckanbauvorrichtung ausgebildet sein. Wenn die Anbauvorrichtung als Frontanbauvorrichtung ausgebildet ist, dient die Befestigungseinrichtung zur Kupplung des Trägerrahmens mit einer frontseitigen Kupplungsvorrichtung des Zug- oder Trägerfahrzeugs. Wenn die Anbauvorrichtung als Heckanbauvorrichtung ausgebildet ist, dient die Befestigungseinrichtung zur Kupplung des Trägerrahmens mit einer heckseitigen Kupplungsvorrichtung des Zug- oder Trägerfahrzeugs. Wenn die Anbauvorrichtung eine Frontanbauvorrichtung ist, tragen die frontseitigen Rahmenteile der Rahmensegmente vorzugsweise die Kupplungsvorrichtungen für die zu befestigenden landwirtschaftlichen Arbeitsgeräte. Wenn die Anbauvorrichtung als Heckanbauvorrichtung ausgebildet ist, tragen die heckseitigen Rahmenteile der Rahmensegmente vorzugsweise die Kupplungsvorrichtungen für die zu befestigenden landwirtschaftlichen Arbeitsgeräte.

In einer weiteren bevorzugten Ausführungsform weist die erfindungsgemäße Anbauvorrichtung eine Reihenerfassungseinrichtung auf, welche dazu eingerichtet ist, die Position und/oder den Verlauf von Pflanzenreihen auf einer landwirtschaftlichen Nutzfläche zu erfassen. Die an der Anbauvorrichtung befestigten Arbeitsgeräte benötigen in diesem Fall keine eigene Reihenerfassung. Die gekoppelten Arbeitsgeräte können vergleichsweise einfach aufgebaut und ausgestattet sein, da die Anbauvorrichtung die Reihenerfassungsfunktion für die gekoppelten Arbeitsgeräte übernimmt. Die erforderliche Technik zum Erkennen und Führen der Arbeitsgeräte muss somit nur an der Anbauvorrichtung vorhanden sein.

Die erfindungsgemäße Anbauvorrichtung wird ferner dadurch vorteilhaft weitergebildet, dass die Reihenerfassungseinrichtung eine oder mehrere Kameras und/oder einen oder mehrere Sensoren umfasst, mittels welchen die Position und/oder der Verlauf von Pflanzenreihen detektierbar ist. Wenn die Reihenerfassungseinrichtung eine oder mehrere Kameras aufweist, erfolgt die Positions- und/oder Verlaufserfassung vorzugsweise durch eine Bildauswertung der von der einen oder den mehreren Kameras aufgezeichneten Bildaufnahmen. Wenn die Positions- und/oder Verlaufserfassung über einen oder mehrere Sensoren erfolgt, kann die Reihenerfassungseinrichtung einen oder mehrere berührungslos arbeitende Sensoren und/oder einen oder mehrere Tastsensoren umfassen, welche dazu eingerichtet sind, die Pflanzenreihen auf Basis eines Kontakts bzw. einer Berührung der Pflanzen zu detektieren. Der eine oder die mehreren Sensoren können jeweils als Abstandssensor ausgebildet sein. Der Abstandssensor kann ein Radarsensor, ein Time-of-Flight (ToF) Sensor, ein Lidarsensor, ein Lasersensor oder ein Laser-Profil-Scanner sein.

Darüber hinaus ist eine erfindungsgemäße Anbauvorrichtung vorteilhaft, welche einen oder mehrere Verstellantriebe aufweist. Mittels des einen oder der mehreren Verstellantriebe sind die Kupplungsvorrichtungen in Querrichtung bewegbar. Der eine oder die mehreren Verstellantriebe können beispielsweise Verstellzylinder sein. Die Verstellzylinder können hydraulische oder pneumatische Verstellzylinder sein. Der eine oder die mehreren Verstellantriebe können auch Elektromotoren sein. Vorzugsweise ist jeder Kupplungsvorrichtung oder jedem Rahmensegment ein Verstellantrieb zugeordnet.

Die erfindungsgemäße Anbauvorrichtung kann ferner eine Steuerungseinrichtung für den einen oder die mehreren Verstellantriebe aufweisen. Die Steuerungseinrichtung ist vorzugsweise dazu eingerichtet, den einen oder die mehreren Verstellantriebe in Abhängigkeit der durch die Reihenerfassungseinrichtung erfassten Position und/oder in Abhängigkeit des durch die Reihenerfassung erfassten Verlaufs der Pflanzenreihen auf der landwirtschaftlichen Nutzfläche zu steuern. Das Steuern des einen oder der mehreren Verstellantriebe erfolgt vorzugsweise während des Bearbeitungsvorgangs, sodass eine reihenbezogene Positionierung und/oder Ausrichtung der Arbeitsgeräte während des Bearbeitungsvorgangs aufrechterhalten wird. Die Verstellantriebe können auch über einen manuellen Benutzereingriff gesteuert werden, beispielsweise kann der Benutzer ein stufenweises oder stufenloses Verfahren der einzelnen Kupplungsvorrichtungen in Querrichtung veranlassen.

In einer anderen bevorzugten Ausführungsform der erfindungsgemäßen Anbauvorrichtung ist diese mit einer Stützeinrichtung ausgestattet, über welche die Anbauvorrichtung gegenüber dem Boden abgestützt wird. Die Stützeinrichtung kann ein oder mehrere Räder oder eine oder mehrere Rollen aufweisen. Alternativ kann die Anbauvorrichtung auch eine abstützungsfreie Anbauvorrichtung sein, welche keine zusätzliche Bodenabstützung umsetzt.

Die der Erfindung zugrundeliegende Aufgabe wird ferner durch ein landwirtschaftliches Arbeitssystem der eingangs genannten Art gelöst, wobei die Anbauvorrichtung des erfindungsgemäßen landwirtschaftlichen Arbeitssystems nach einer der vorstehend beschriebenen Ausführungsformen ausgebildet ist. Hinsichtlich der Vorteile und Modifikationen des erfindungsgemäßen landwirtschaftlichen Arbeitssystems wird somit zunächst auf die Vorteile und Modifikationen der erfindungsgemäßen Anbauvorrichtung verwiesen.

In einer bevorzugten Ausführungsform des erfindungsgemäßen landwirtschaftlichen Arbeitssystems sind die an der Anbauvorrichtung befestigten landwirtschaftlichen Arbeitsgeräte Geräte zur Bestandpflege. Die landwirtschaftlichen Arbeitsgeräte können beispielsweise Bodenbearbeitungsgeräte, insbesondere landwirtschaftliche Hackgeräte, sein.

Die landwirtschaftlichen Arbeitsgeräte können jeweils mehrere Bodenbearbeitungswerkzeuge, insbesondere Hackwerkzeuge, aufweisen. Die landwirtschaftlichen Arbeitsgeräte können jeweils mehrere Schneidwerkzeuge zum Zerschneiden des Bodens oder zum Zerschneiden von in den Boden eingebetteten Pflanzenresten aufweisen.

Die landwirtschaftlichen Arbeitsgeräte können ferner auch Düngerapplikatoren sein. Die Düngerapplikatoren können dazu eingerichtet sein, Dünger reihenbezogen oder portioniert, also in Düngerportionen, auszubringen bzw. abzulegen.

Die landwirtschaftlichen Arbeitsgeräte können auch Spritzgeräte, beispielsweise Bandspritzen sein, welche dazu eingerichtet sind, eine Spritzflüssigkeit auf die landwirtschaftliche Nutzfläche auszubringen.

Ferner können die landwirtschaftlichen Arbeitsgeräte auch dazu eingerichtet sein, eine Unkrautbekämpfung mittels Elektroapplikationen auszuführen. Die landwirtschaftlichen Arbeitsgeräte können folglich Elektroherbizidgeräte sein. Die Elektroherbizidgeräte können beispielsweise Leitelemente für elektrischen Strom aufweisen, über welche ein Stromfluss durch Schadbewuchspflanzen hindurchgeleitet werden kann, sodass diese aufgrund des eingeleiteten Stroms absterben.

Nachfolgend wird eine bevorzugte Ausführungsform der Erfindung unter Bezugnahme auf die beiliegenden Zeichnungen näher erläutert und beschrieben. Dabei zeigen:
- Fig. 1: ein Ausführungsbeispiel des erfindungsgemäßen Arbeitssystems in einer schematischen Darstellung; und
- Fig. 2: ein Rahmensegment der Anbauvorrichtung des in der Fig. 1 abgebildeten Arbeitssystems in einer schematischen Darstellung.

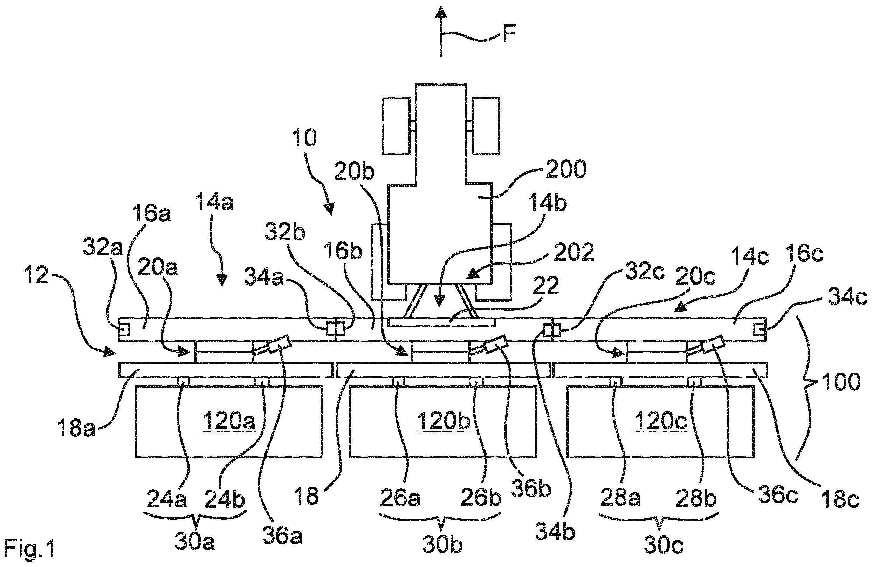

Die Fig. 1 zeigt ein landwirtschaftliches Arbeitssystem 100 während der Bearbeitung einer landwirtschaftlichen Nutzfläche. Das landwirtschaftliche Arbeitssystem 100 umfasst eine Anbauvorrichtung 10 und mehrere, vorliegend drei, in Querrichtung nebeneinander angeordnete und an der Anbauvorrichtung 10 befestigte landwirtschaftliche Arbeitsgeräte 102a-102c. Das landwirtschaftliche Arbeitssystem 100 wird von einem als Traktor ausgebildeten Trägerfahrzeug 200 gezogen. Das Trägerfahrzeug 200 und das Arbeitssystem 100 bewegen sich in Fahrtrichtung F.

Die an der Anbauvorrichtung 10 befestigten landwirtschaftlichen Arbeitsgeräte 102a-102c sind Geräte zur Bestandpflege, nämlich landwirtschaftliche Hackgeräte. Die landwirtschaftlichen Arbeitsgeräte 102a-102c weisen demnach mehrere in Querrichtung, also quer zur Fahrtrichtung F, nebeneinander angeordnete Hackwerkzeuge zur Bodenbearbeitung auf.

In anderen Ausführungsformen des Arbeitssystems 100 können die Arbeitsgeräte 102a-102c auch als Düngerapplikatoren, Sämaschinen, Spritzgeräte oder Elektroherbizidgeräte ausgebildet sein.

Die Anbauvorrichtung 10 ist vorliegend als Heckanbauvorrichtung ausgebildet. Die Anbauvorrichtung 10 umfasst einen sich quer zur Fahrtrichtung F erstreckenden Trägerrahmen 12 auf, wobei der Trägerrahmen 12 über eine Befestigungseinrichtung 22 mit einer Kupplungsvorrichtung 202 des Trägerfahrzeugs 200 verbunden ist. Die Kupplungsvorrichtung 202 des Trägerfahrzeugs 200 kann beispielsweise ein Dreipunkt-Kraftheber sein. Demnach kann die Befestigungseinrichtung 22 der Anbauvorrichtung 10 quer zur Fahrtrichtung F orientierte Wellen oder Bolzen aufweisen, welche in Fanghaken der Kupplungsvorrichtung 202 des Trägerfahrzeugs 200 einhängbar sind.

Der Trägerrahmen 12 umfasst mehrere, vorliegend drei, Rahmensegmente 14a-14c. Die Rahmensegmente 14a-14c sind in Querrichtung nebeneinander angeordnet. Jedes Rahmensegment 14a-14c umfasst ein frontseitiges Rahmenteil 16a-16c und ein heckseitiges Rahmenteil 18a-18c. Das frontseitige Rahmenteil 16b des Rahmensegments 14b trägt die Befestigungseinrichtung 22. Die frontseitigen Rahmenteile 16a-16c und die heckseitigen Rahmenteile 18a-18c der jeweiligen Rahmensegmente 14a-14c sind über Verbindungsgestänge 20a-20c miteinander verbunden. Die Verbindungsgestänge 22a-22c sind als Parallelogrammgestänge ausgeführt und erlauben eine Parallelverschiebung der Rahmenteile 18a-18c quer zur Fahrtrichtung F.

An den Rahmenteilen 18a-18c sind jeweils Kupplungsvorrichtungen 30a-30c angeordnet. Die Kupplungsvorrichtung 30a weist Fanghaken 24a, 24b auf, über welche das Arbeitsgerät 102a an der Anbauvorrichtung 10 befestigt ist. Die Kupplungsvorrichtung 30b weist Fanghaken 26a, 26b auf, über welche das Arbeitsgerät 102b an der Anbauvorrichtung 10 befestigt ist. Die Kupplungsvorrichtung 30c weist Fanghaken 28a, 28b auf, über welche das Arbeitsgerät 102c an der Anbauvorrichtung 10 befestigt ist. Die Kupplungsvorrichtungen 30a-30c sind in Querrichtung nebeneinander angeordnet. Über die als Parallelogrammgestänge ausgebildeten Verbindungsgestänge 20a-20c sind die Kupplungsvorrichtungen 30a-30c zur Verschiebung der Arbeitsgeräte 102a-102c in Querrichtung bewegbar. Die Kupplungsvorrichtungen 30a-30c sowie die an den Kupplungsvorrichtungen 30a-30c befestigen Arbeitsgeräte 102a-102c können einzeln und unabhängig voneinander in Querrichtung bewegt werden. Jedes Rahmensegment 14a-14c trägt folglich eine Kupplungsvorrichtung 30a-30c, wobei die Rahmensegmente 14a-14c reversibel und zerstörungsfrei lösbar miteinander verbunden sind. Über die reversible Lösbarkeit kann die Anzahl der Rahmensegmente 14a-14c variiert und somit die gewünschte Gesamt- oder Summenarbeitsbreite angepasst werden.

Die Rahmensegmente 14a-14c weisen an der linken seitlichen Stirnseite jeweils ein Befestigungsglied 32a-32c auf. Ferner weisen die Rahmensegmente 14a-14c an der rechten seitlichen Stirnseite jeweils ein Befestigungsglied 34a-34c auf. Über die Befestigungsglieder 32a-32c, 34a-34c sind die Rahmensegmente 14a-14c miteinander verbunden. Die Befestigungsglieder 34a, 32b bilden ein Befestigungsmechanismus, mit welchem die Rahmensegmente 14a, 14b aneinander befestigt sind. Die Befestigungsglieder 34b, 32c bilden einen Befestigungsmechanismus, mittels welchem die Rahmensegmente 14b, 14c aneinander befestigt sind. Über die außenliegenden Befestigungsglieder 32a, 34c lässt sich die Anbauvorrichtung 10 um weitere Rahmensegmente erweitern.

Die Anbauvorrichtung 10 weist ferner mehrere Verstellantriebe 36a-36c auf, mittels welchen die Kupplungsvorrichtungen 30a-30c in Querrichtung bewegbar sind. Die Verstellantriebe 36a-36c können beispielsweise Verstellzylinder sein, welche direkt auf die als Parallelogrammgestänge ausgebildeten Verbindungsgestänge 20a-20c wirken. Alternativ können die Verstellantriebe 36a-36c beispielsweise auch Elektromotoren sein. In dem dargestellten Ausführungsbeispiel umfasst jedes Rahmensegment 14a-14c einen Verstellantrieb 36a-36c, sodass die Kupplungsvorrichtungen 30a-30c der jeweiligen Rahmensegmente 14a-14c unabhängig voneinander über eigene Verstellantriebe 36a-36c in Querrichtung verfahren werden können. Die Verstellantriebe 36a-36c sind mit einer Steuerungseinrichtung der Anbauvorrichtung 10 verbunden. Mittels der Steuerungseinrichtung können die Verstellantriebe 36a-36c während eines Bearbeitungsvorgangs derart angesteuert werden, dass eine reihengeführte Bearbeitung der landwirtschaftlichen Nutzfläche mittels der Arbeitsgeräte 102a-102c erfolgt.

Zur Umsetzung einer Reihenführung weist die Anbauvorrichtung 10 eine Reihenerfassungseinrichtung auf, mittels welcher die Position und/oder der Verlauf von Pflanzenreihen auf der landwirtschaftlichen Nutzfläche erfasst werden kann. Hierzu kann die Reihenerfassungseinrichtung über eine oder mehrere Kameras und/oder über einen oder mehrere Sensoren verfügen, mittels welchen die Position und/oder der Verlauf von Pflanzenreihen detektierbar ist. Dadurch, dass die Anbauvorrichtung 10 eine Reihenerfassungseinrichtung umfasst, benötigen die an der Anbauvorrichtung 10 befestigten Arbeitsgeräte 102a-102c keine eigene Reihenerfassung. Somit können Arbeitsgeräte 102a-102c eingesetzt werden, welche nicht über die erforderliche Technik zum Erkennen und Führen der Arbeitsgeräte 102a-102c verfügen. Die Steuerungseinrichtung der Anbauvorrichtung 10 steuert die Verstellantriebe 36a-36c in Abhängigkeit der durch die Reihenerfassungseinrichtung erfassten Position und/oder in Abhängigkeit des durch die Reihenerfassungseinrichtung erfassten Verlaufs der Pflanzenreihen auf der landwirtschaftlichen Nutzfläche. Auf diese Weise kann eine reihenbezogene Positionierung und/oder Ausrichtung der Arbeitsgeräte 102a-102c während des Bearbeitungsvorgangs aufrechterhalten werden.

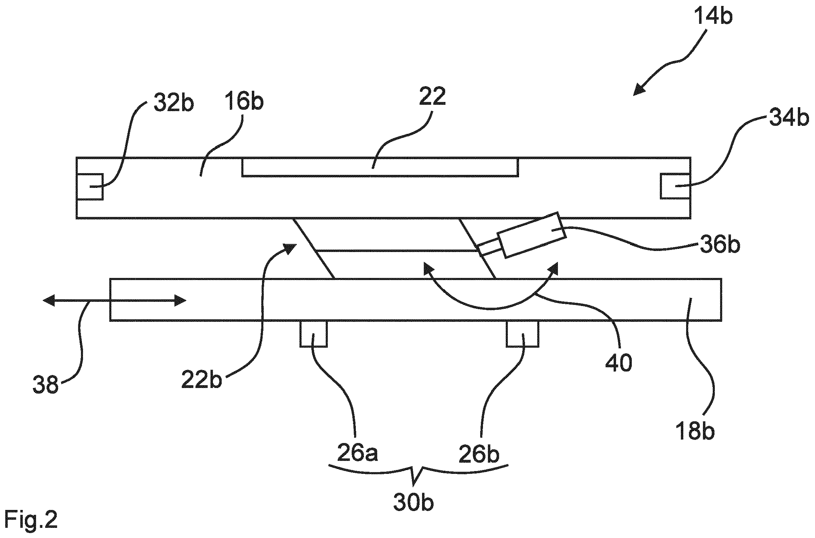

Die Fig. 2 zeigt das Rahmensegment 14b der in der Fig. 1 abgebildeten Anbauvorrichtung 10. Die Darstellung verdeutlicht, dass das Rahmenteil 18b samt der Kupplungsvorrichtung 30b in die sich quer zur Fahrtrichtung F erstreckenden Verschieberichtungen 38 nach links und rechts verschoben werden kann. Das als Parallelogrammgestänge ausgebildete Verbindungsgestänge 20b führt beim Verschieben der Kupplungsvorrichtung 30b eine Schwenkbewegung in die dargestellten Schwenkrichtungen 40 aus.

Einzelne oder sämtliche Rahmensegmente 14a-14c einer Anbauvorrichtung 10 können ferner über eine Stützeinrichtung verfügen, mittels welche die Anbauvorrichtung 10 gegenüber dem Boden der landwirtschaftlichen Nutzfläche abgestützt werden kann. Die Stützeinrichtung kann beispielsweise ein oder mehrere Räder oder eine oder mehrere Rollen aufweisen, welche die Anbauvorrichtung 10 während des Bearbeitungsvorgangs gegenüber dem Boden der landwirtschaftlichen Nutzfläche abstützen.

### Bezugszeichenliste

- 10: Anbauvorrichtung
- 12: Trägerrahmen
- 14a-14c: Rahmensegmente
- 16a-16c: Rahmenteile
- 18a-18c: Rahmenteile
- 20a-20c: Verbindungsgestänge
- 22: Befestigungseinrichtung
- 24a,24b: Fanghaken
- 26a,26b: Fanghaken
- 28a,28b: Fanghaken
- 30a-30c: Kupplungsvorrichtungen
- 32a-32c: Befestigungsglieder
- 34a-34c: Befestigungsglieder
- 36a-36c: Verstellantriebe
- 38: Verschieberichtungen
- 40: Schwenkrichtungen

- 100: Arbeitssystem
- 102a-102c: Arbeitsgeräte

- 200: Trägerfahrzeug
- 202: Kupplungsvorrichtung

- F: Fahrrichtung

## Patentansprüche

1. Anbauvorrichtung (10) für landwirtschaftliche Arbeitsgeräte (102a-102c), mit
- einem sich in Querrichtung erstreckenden Trägerrahmen (12); und
- einer Befestigungseinrichtung (22) zur Kupplung des Trägerrahmens (12) mit einem Zug- oder Trägerfahrzeug (200);
**gekennzeichnet durch** mehrere in Querrichtung nebeneinander angeordnete Kupplungsvorrichtungen (30a-30c), wobei mittels der Kupplungsvorrichtungen (30a-30c) mehrere landwirtschaftliche Arbeitsgeräte (102a-102c) in Querrichtung nebeneinander an der Anbauvorrichtung (10) befestigbar sind.

2. Anbauvorrichtung (10) nach Anspruch 1,
**dadurch gekennzeichnet, dass** die Kupplungsvorrichtungen (30a-30c) zur Verschiebung der an der Anbauvorrichtung (10) befestigten Arbeitsgeräte (102a-102c) in Querrichtung bewegbar sind.

3. Anbauvorrichtung (10) nach Anspruch 1 oder 2,
**dadurch gekennzeichnet, dass** der Trägerrahmen (12) mehrere Rahmensegmente (14a-14c) aufweist, wobei jedes Rahmensegment (14a-14c) eine Kupplungsvorrichtung (30a-30c) trägt und die Rahmensegmente (14a-14c) reversibel lösbar miteinander verbunden sind.

4. Anbauvorrichtung (10) nach Anspruch 3,
**dadurch gekennzeichnet, dass** die Rahmensegmente (14a-14c) an zumindest einer seitlichen Stirnseite ein oder mehrere Befestigungsglieder (32a-32c, 34a-34c) aufweisen, über welche die jeweiligen Rahmensegmente (14a-14c) mit einem benachbarten Rahmensegment (14a-14c) verbunden oder verbindbar sind.

5. Anbauvorrichtung (10) nach einem der vorstehenden Ansprüche,
**gekennzeichnet durch** eine Reihenerfassungseinrichtung, welche dazu eingerichtet ist, die Position und/oder den Verlauf von Pflanzenreihen auf einer landwirtschaftlichen Nutzfläche zu erfassen.

6. Anbauvorrichtung (10) nach Anspruch 5,
**dadurch gekennzeichnet, dass** die Reihenerfassungseinrichtung eine oder mehrere Kameras und/oder einen oder mehrere Sensoren umfasst, mittels welchen die Position und/oder der Verlauf von Pflanzenreihen detektierbar ist.

7. Anbauvorrichtung (10) nach einem der vorstehenden Ansprüche,
**gekennzeichnet durch** einen oder mehrere Verstellantriebe (36a-36c), mittels welchen die Kupplungsvorrichtungen (30a-30c) in Querrichtung bewegbar sind.

8. Anbauvorrichtung (10) nach Anspruch 7,
**gekennzeichnet durch** eine Steuerungseinrichtung für den einen oder die mehreren Verstellantriebe (36a-36c), wobei die Steuerungseinrichtung vorzugsweise dazu eingerichtet ist, den einen oder die mehreren Verstellantriebe (36a-36c) in Abhängigkeit der durch die Reihenerfassungseinrichtung erfassten Position und/oder in Abhängigkeit des durch die Reihenerfassungseinrichtung erfassten Verlaufs der Pflanzenreihen auf einer landwirtschaftlichen Nutzfläche zu steuern.

9. Anbauvorrichtung (10) nach einem der vorstehenden Ansprüche,
**gekennzeichnet durch** eine Stützeinrichtung, über welche die Anbauvorrichtung (10) gegenüber dem Boden abgestützt wird.

10. Landwirtschaftliches Arbeitssystem (100) für die Bearbeitung von landwirtschaftlichen Nutzflächen und deren Pflanzenbestand, mit
- einer Anbauvorrichtung (10); und
- mehreren in Querrichtung nebeneinander angeordneten und an der Anbauvorrichtung (10) befestigten landwirtschaftlichen Arbeitsgeräten (102a-102c);
**dadurch gekennzeichnet, dass** die Anbauvorrichtung (10) nach einem der vorstehenden Ansprüche ausgebildet ist.

11. Landwirtschaftliches Arbeitssystem (100) nach Anspruch 10,
**dadurch gekennzeichnet, dass** die an der Anbauvorrichtung (10) befestigten landwirtschaftlichen Arbeitsgeräte (102a-102c) Geräte zur Bestandspflege sind.
